# EUROPEAN PATENT APPLICATION

(11) **EP 4 782 306 A1**
(43) Date of publication of application: **29.07.2026**
(21) Application number: 24867313.9
(22) Date of filing: 06.09.2024
(51) Int. Cl.: B62D 1/11, B62D 7/22

(54) **DAMPING MODULE FOR STEERING WHEEL DEVICE OF VEHICLE, AND STEERING WHEEL DEVICE AND VEHICLE**

(30) Priority: 21.09.2023 CN 202322578186 U
(71) Applicant: Yanfeng International Automotive Technology Co., Ltd., Shanghai 201306 (CN)
(72) Inventor: WANG, Lirong, Shanghai 201315 (CN); YANG, Guiji, Shanghai 201315 (CN); WANG, Chao, Shanghai 201315 (CN)
(74) Representative: Reitstötter Kinzebach
(86) International application number: PCT/CN2024/117305
(87) International publication number: WO 2025/060901

(57) **Abstract**

The present disclosure relates to a damping module for a steering wheel device of a vehicle, a steering wheel device, and a vehicle. The steering wheel device comprises a steering wheel element, a damping module, and a fastener, the damping module comprising: a damping mass; and a damping unit comprising a damping bushing, a first damping element and a second damping element, a first damping element and a second damping element being sleeved on the damping bushing and each having at least one supporting surface; wherein the fastener fixes the damping unit to the steering wheel element, and enables at least one supporting surface of the first and/or second damping elements to abut against the damping mass, or the fastener fixes the damping unit to the damping mass, and enables at least one supporting surface of the first damping element and/or the second damping element to abut against the steering wheel element. The present disclosure, by flexibly providing a plurality of supporting surfaces on the first damping element and the second damping element, achieves vibration damping while enabling the possibility of manufacturing using a plurality of materials, and has a simple structure and broad applications.

## Description

### RELATED FIELD

The present disclosure relates generally to a damping module for a steering wheel device of a vehicle, a steering wheel device comprising such a damping module and a vehicle comprising such a steering wheel device.

### BACKGROUND

During driving process of a vehicle, when excitation generated by excitation sources such as uneven road surfaces and an engine is transmitted to a steering wheel through a steering system, resonance of the steering wheel can be caused at a specific frequency, and a driver will have an obvious discomfort feeling at the moment.

In the prior art, a dynamic vibration absorber is usually provided on a steering wheel. The dynamic vibration absorber is a mass block with a specific frequency provided on the steering wheel, and the mass block is isolated connected to the steering wheel by using a damping unit made of an elastic material. When the vibration frequency of the steering wheel reaches the resonance point of the mass block, the mass block resonates, and its resonance kinetic energy is converted into heat energy through the compression damping unit and consumed. Therefore, the purpose of eliminating the kinetic energy on the steering wheel rim is finally achieved.

In the prior art, the damping unit can only be manufactured by liquid silica gel, which has high cost and complex structure, and is not conducive to popularization and application.

### SUMMARY

An object of the present disclosure is to provide a damping module for a steering wheel device of a vehicle to overcome at least one defect of the prior art. That is, the damping module according to the present disclosure has a simple structure and is easy to manufacture and apply.

To this end, a first aspect of the present disclosure provides a damping module for a steering wheel device of a vehicle, the steering wheel device comprising a steering wheel element, the damping module and a fastener, the damping module comprising: a damping mass; and a damping unit comprising a damping bushing, a first damping element and a second damping element, the first damping element and the second damping element being sleeved on the damping bushing and each having at least one supporting surface; wherein the fastener fixes the damping unit to the steering wheel element and enables at least one supporting surface of the first damping element and/or the second damping element to abut against the damping mass, or the fastener fixes the damping unit to the damping mass and enables at least one supporting surface of the first damping element and/or the second damping element to abut against the steering wheel element.

According to an optional embodiment of the present disclosure, the steering wheel element comprises a steering wheel armature and a horn pad mounted to the steering wheel armature; the damping mass comprises the horn pad and an airbag mounted to the horn pad; and the fastener fixes the damping unit to the steering wheel armature and enables at least one supporting surface of the first damping element and/or the second damping element to abut against the horn pad.

According to an optional embodiment of the present disclosure, the steering wheel element comprises a steering wheel armature and a horn pad mounted to the steering wheel armature; the damping mass comprises an airbag mounted to the horn pad; and the fastener fixes the damping unit to the airbag and enables at least one supporting surface of the first damping element and/or the second damping element to abut against the horn pad.

According to an optional embodiment of the present disclosure, the first damping element and the second damping element are sleeved on the damping bushing without a spacing, or the first damping element and the second damping element are formed as one piece.

According to an optional embodiment of the present disclosure, the damping bushing comprises a guiding shaft having a central through hole and a first abutting flange protruding radially and outward from the guiding shaft, the first damping element and the second damping element are sleeved on the guiding shaft, and the fastener comprises a fastening shaft extending into the central through hole and a second abutting flange protruding radially and outward from the fastening shaft outside the central through hole.

According to an alternative embodiment of the present disclosure, the first damping element has a first supporting surface and a second supporting surface arranged at an angle to each other and abutting radially and outward against the steering wheel element.

According to an optional embodiment of the present disclosure, the first supporting surface extends parallel to an axial direction of the damping bushing, and the second supporting surface extends obliquely relative to the axial direction of the damping bushing.

According to an optional embodiment of the present disclosure, the first damping element further has a third supporting surface abutting radially and inward against the damping bushing.

According to an optional embodiment of the present disclosure, at least one of the first supporting surface and the second supporting surface at least partially overlaps with a projection of the third supporting surface along an axial direction of the damping bushing.

According to an optional embodiment of the present disclosure, the first damping element further has a fourth supporting surface axially abutting against the second abutting flange.

According to an optional embodiment of the present disclosure, the second damping element has a fifth supporting surface axially abutting against the steering wheel element.

According to an optional embodiment of the present disclosure, the second damping element further has a sixth supporting surface abutting radially and inward against the damping bushing.

According to an optional embodiment of the present disclosure, the second damping element further has a seventh supporting surface axially abutting against the first abutting flange.

According to an optional embodiment of the present disclosure, the first damping element further has an eighth supporting surface oriented opposite to the fourth supporting surface and axially abutting against the steering wheel element.

A second aspect of the present disclosure provides a steering wheel device, comprising the damping module according to the first aspect of the present disclosure.

A third aspect of the present disclosure provides a vehicle comprising the steering wheel device according to the second aspect of the present disclosure.

Compared with the prior art, the present disclosure has a plurality of advantages, in particular, by flexibly providing a plurality of supporting surfaces on the first damping element and the second damping element, the damping unit achieves stable vibration damping while enabling the possibility of manufacturing using a plurality of materials, and has a simple structure and broad applications.

### BRIEF DESCRIPTION OF THE DRAWINGS

Other features and advantages of the present disclosure will be better understood through the following preferred embodiments described in detail in connection with accompanying drawings. In the drawings, same reference numerals indicate same or similar components.
FIG. 1 is a schematic view of a steering wheel device according to an embodiment of the present disclosure, wherein an arrow represents a steering wheel shaking direction;
FIG. 2 is an assembly view of the steering wheel device;
FIG. 3 is an exploded view of a first embodiment of a damping module of the steering wheel device;
FIG. 4 is a plan view of a horn pad of the steering wheel device;
FIG. 5 is a cross-sectional view of the steering wheel device with the airbag mounted to the horn pad along a plane D-D in FIG. 4;
FIG. 6 is an exploded view of the damping unit of the damping module of the first embodiment and the horn pad;
FIG. 7 is a sectional view of the steering wheel device along a plane E-E in FIG. 1, wherein the steering wheel device has the damping module of the first embodiment;
FIG. 8 is an enlarged view of a damping unit region of the damping module in FIG. 7;
FIG. 9 is a perspective view of a damping unit of the damping module of the first embodiment;
FIG. 10 is a sectional view of the steering wheel device along a plane E-E in FIG. 1, wherein the steering wheel device has the damping module of the second embodiment;
FIG. 11 is an enlarged view of a damping unit region of the damping module in FIG. 10;
FIG. 12 is a partial sectional view of the steering wheel device along a plane E-E in FIG. 1, wherein the steering wheel device has a damping module of a third embodiment;
FIG. 13 is a perspective view of a damping unit of the damping module of the third embodiment;
FIG. 14 is an exploded view of the damping unit and the horn pad of the damping module of the third embodiment;

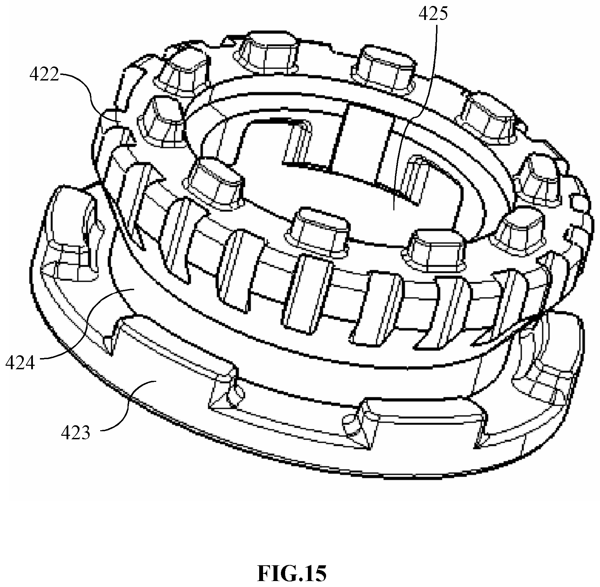

FIG. 15 is a perspective view of a fourth embodiment of a damping unit of a damping module of the steering wheel device.

### DETAILED DESCRIPTION

The implementation and usage of specific embodiments are discussed in detail below. However, it should be understood that the discussed specific embodiments are merely intended to illustrate specific ways of implementing and using the present disclosure, and are not intended to limit the scope of the present disclosure.

In this specification, directional expressions such as "upper", "lower", "inner" and "outer" and the like are not absolute but are relative when describing the structural positions of various components. When the components are arranged as shown in the figures, these directional expressions are appropriate, but when the positions of the components in the figures are changed, these directional expressions should be changed accordingly. Further, in this description, "axial" and "radial" are defined with reference to the axial and radial directions of the damping units (e.g., damping bushings) of the damping module.

### First Embodiment

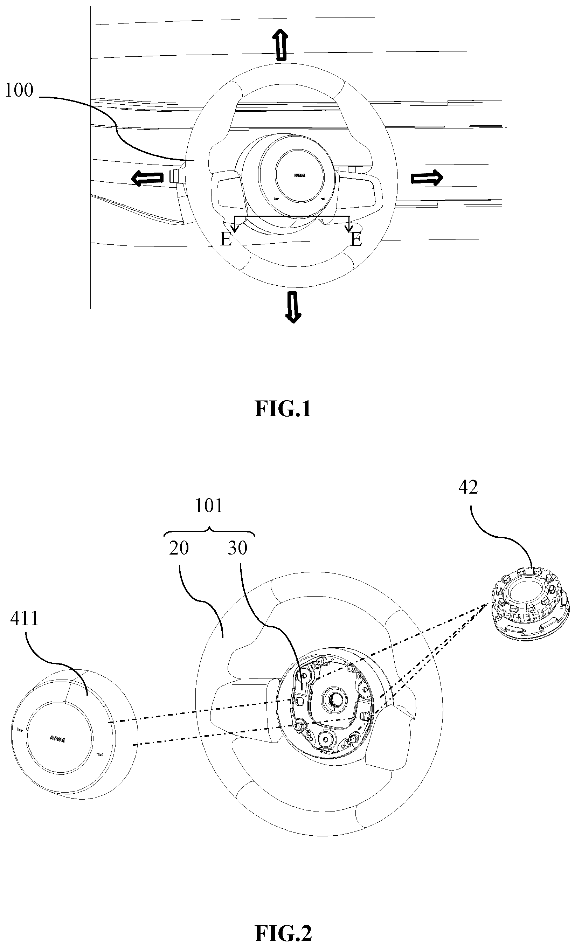

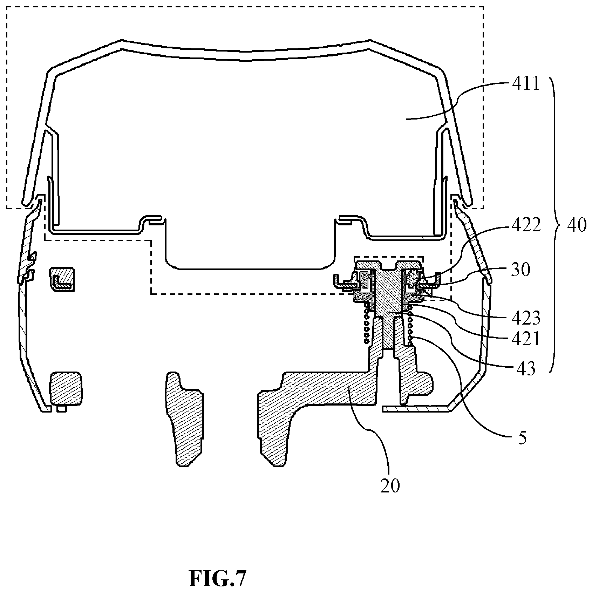

As shown in FIG. 1 to FIG. 3, the vibration direction of the steering wheel during vehicle driving is generally diffuse radially and outward along the hub. The steering wheel device 100 comprises a steering wheel element 101, a damping module 40(shown in FIG. 7), and a fastener 43. The steering wheel element 101 comprises a steering wheel armature 20 and a horn pad 30 mounted to the steering wheel armature 20. The damping module 40 comprises a damping mass 41 and a damping unit 42.

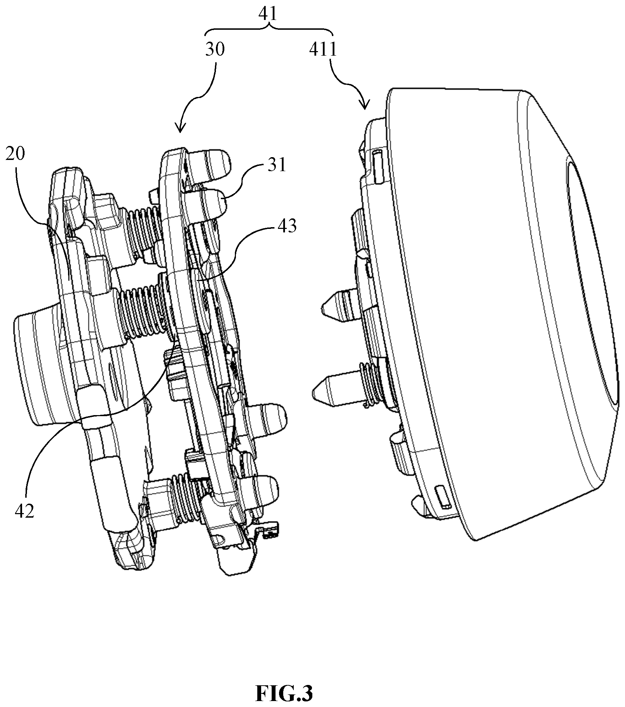

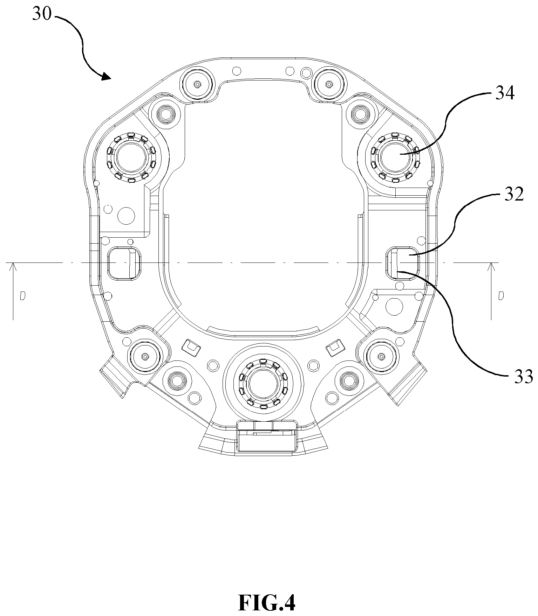

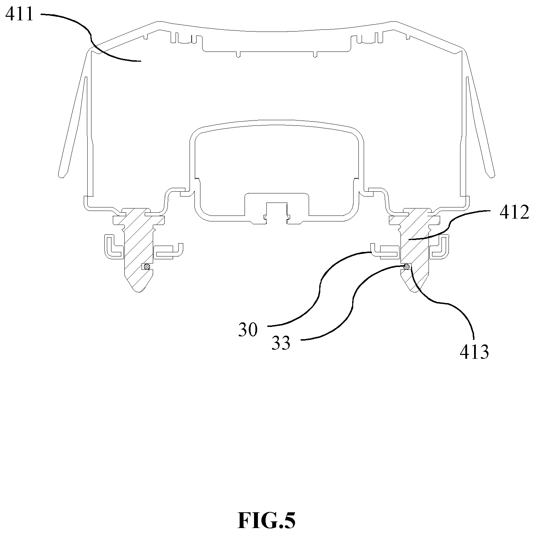

As shown in FIGS. 3 to FIG. 5, in this first embodiment, the damping mass 41 comprises a horn pad 30 and a driver-side airbag 411 mounted to the horn pad 30. The horn pad 30 is provided with a plurality of supporting rubber cushions 31 and a plurality of through holes 32, and the lower side of the through hole 32 is provided with a snap-fit wire 33. The housing of the airbag 411 is provided with snap-fit pins 412 corresponding to the number of the through holes 32, and a snap-fit pin 412 is provided with a slot 413. When the airbag 411 is mounted, the snap-fit pin 412 is aligned with the through hole 32 on the horn pad 30, and is pressed downward to a certain displacement, so that the snap-fit wire 33 is deformed and snap-fitted into the slot 413 under tension. In this case, the supporting rubber cushion 31 abuts against a housing of the airbag 411 to form a stable balance structure. At this time, the horn pad 30 and the airbag 411 are fixed as a whole.

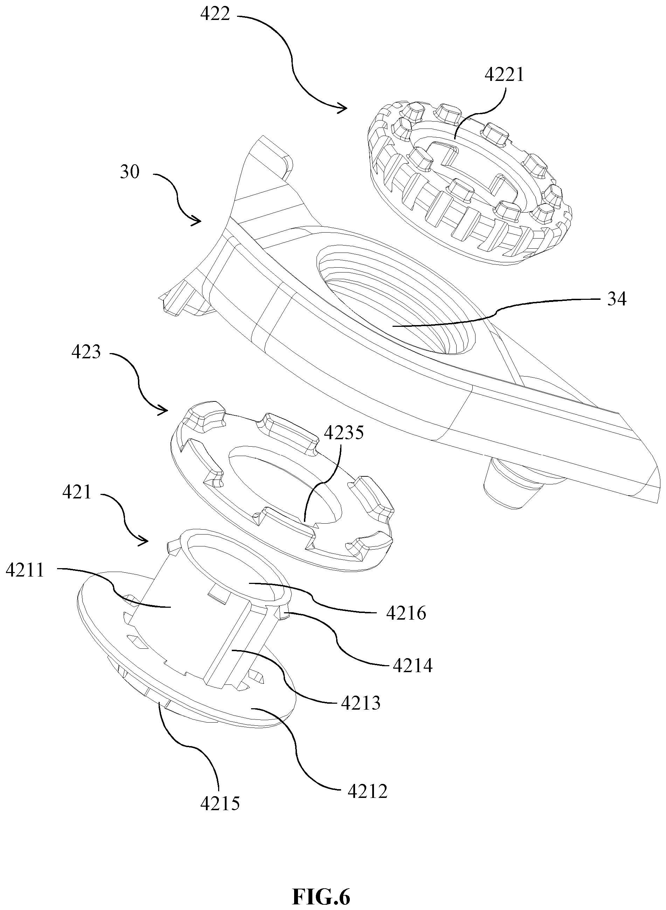

As shown in FIGS. 6 and 7, the damping unit 42 comprises a damping bushing 421, a first damping element 422 and a second damping element 423, the first damping element 422 and the second damping element 423 are sleeved on the damping bushing 421, and each has at least one supporting surface. The horn pad 30 is provided with a plurality of mounting holes 34, and the first damping element 422 and the second damping element 423 are respectively mounted into the corresponding mounting holes 34 from the upper and lower directions.

More specifically, as shown in FIG. 6, the damping bushing 421 comprises a guiding shaft 4211 having a central through hole 4216 and a first abutting flange 4212 protruding radially and outward from the guiding shaft 4211, the first damping element 422 and the second damping element 423 are sleeved on the guiding shaft 4211, and a lower surface of the second damping element 423 abuts against the first abutting flange 4212. An outer wall of the guiding shaft 4211 is provided with a positioning column 4213 protruding outward and extending along an axial direction, and an inner edge of the first damping element 422 and the second damping element 423 is provided with a positioning slot 4235 mated with the positioning column 4213. An upper edge of the outer wall of the guiding shaft 4211 is provided with a plurality of clips 4214 uniformly distributed along the circumferential direction, and an inner wall of the first damping element 422 is provided with a step surface 4221. Through the cooperation of the positioning column 4213 and the positioning groove 4235, the guiding shaft 4211 sequentially passes through the second damping element 423, the mounting hole 34, and the first damping element 422 and the clip 4214 is snap-fitted into the step surface 4221, thereby completing the pre-mounting of the damping unit 42 and the horn pad 30. Then, the pre-mounted first damping element 422, the second damping element 423 and the horn pad 30 are placed at corresponding positions of the steering wheel armature 20, and then connected to the steering wheel armature 20 through the fastener 43.

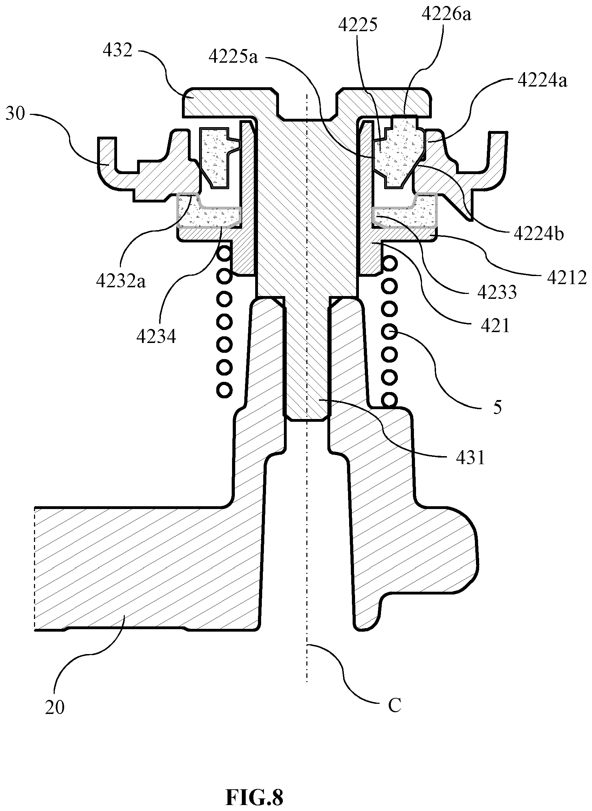

As shown in FIGS. 7 and 8, the fastener 43 comprises a fastening shaft 431 extending into the central through hole 4216 and a second abutting flange 432 protruding radially and outward from the fastening shaft 431 outside the central through hole 4216. Fastener 43 fixes the damping unit 42 to the steering wheel element 101, and enables at least one supporting surface of the first damping element 422 and/or the second damping element 423 to abut against the damping mass 41. More specifically, in this first embodiment, the fastener 43 fixes the damping unit 42 to the steering wheel armature 20 and enables at least one supporting surface of the first damping element 422 and/or the second damping element 423 to abut against the horn pad 30. For example, the fastener 43 is provided as a shoulder bolt.

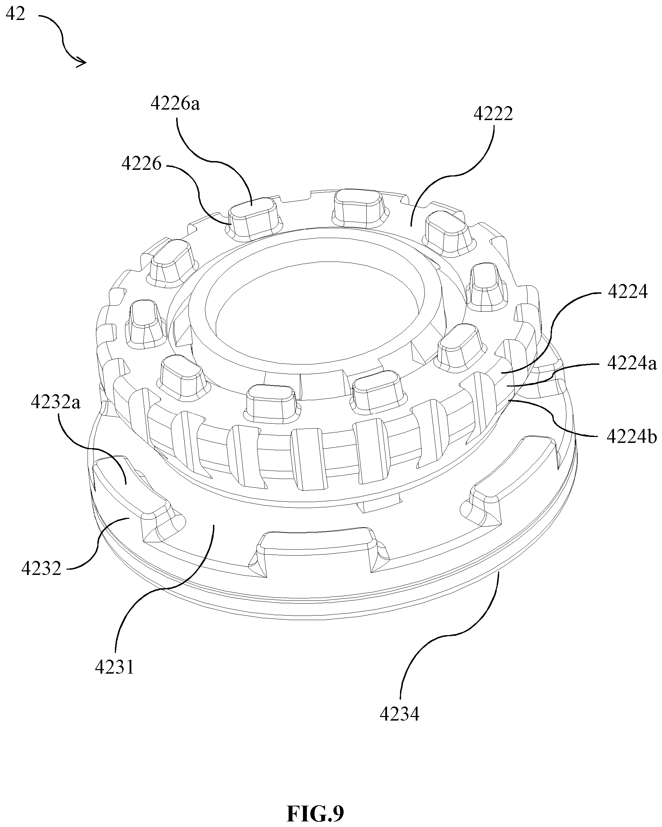

The first damping element 422 and the second damping element 423 are described in further detail below with reference to FIGS. 8 and 9. The first damping element 422 and the second damping element 423 are respectively made of an elastic material. The elastic material comprises but is not limited to various materials such as liquid silica gel. According to an implementation variation, the first damping element 422 and the second damping element 423 may be made of the same elastic material with the same composition but different proportions for adjusting the support stiffness in different directions to meet different frequency requirements; or the first damping element 422 and the second damping element 423 may be made of different materials while meeting the performance requirements.

The first damping element 422 comprises an annular first body 4222 and a plurality of first protrusions 4224 and a plurality of second protrusions 4225 protruding radially outward and inward from the first body 4222, respectively.

The plurality of first protrusions 4224 are, for example, uniformly arranged along the circumferential direction of an outer side surface of the first body 4222, and the radially outer surface of each first protrusion 4224 forms a first supporting surface 4224a and a second supporting surface 4224b. The first supporting surface 4224 and the second supporting surface 4224b are provided at an angle to each other and abut radially and outward against the horn pad 30. The angle between the first supporting surface 4224a and the second supporting surface 4224b is adapted to the curvature of the inner surface of the mounting hole 34 of the horn pad 30. For example, the first supporting surface 4224a extends parallel to the axial direction of the damping bushing 421, and the second supporting surface 4224b extends obliquely relative to the axial direction of the damping bushing 421. For example, the angle between the first supporting surface 4224a and the second supporting surface 4224b is 180 degrees to 270 degrees.

The plurality of second protrusions 4225 are, for example, uniformly arranged along the circumferential direction of the inner side surface of the first body 4222, and the radially inner surface of each second protrusion 4225 forms a third supporting surface 4225a. The third supporting surface 4225a abuts radially and inward against the damping bushing 421. At least one of the first supporting surface 4224a and the second supporting surface 4224b, preferably each of the first supporting surface 4224a and the second supporting surface 4224b at least partially overlaps with the projection of the third supporting surface 4225a along the axial direction of the damping bushing, so that the first damping element 422 has two supporting forces in opposite directions in the same radial direction, thereby increasing the stability of the first damping element 422.

In addition, the first damping element 422 further comprises a plurality of third protrusions 4226 protruding from an upper surface of the first body 4222 and uniformly arranged, for example, circumferentially, and an upper surface of each third protrusion 4226 forms a fourth supporting surface 4226a. The fourth supporting surface 4226a axially abuts against the second abutting flange 432 of the fastener 43 to provide axial support for the first damping element 422.

The second damping element 423 comprises an annular second body 4231 and a plurality of fourth protrusions 4232 protruding upward from the second body 4231. The plurality of fourth protrusions 4232 are uniformly provided along a circumferential direction of the outer edge of the second body 4231, an upper surface of each fourth protrusion 4232 forms a fifth supporting surface 4232a, and the fifth supporting surface 4232a axially abuts against the horn pad 30. In addition, an inner side surface of the second body 4231 forms a sixth supporting surface 4233 abutting radially and inward against the damping bushing 421, and a lower surface of the second body 4231 forms a seventh supporting surface 4234 that is oriented opposite to the fifth supporting surface 4232a and axially abuts against the first abutting flange 4212. The number and shape of the above supporting surfaces, and the height, thickness and shape of each protrusion may be provided according to the requirements of the actual support stiffness and frequency, which are not limited in the present disclosure. For example, the first protrusion 4224 may be provided as teeth-like or rib-like structures, and the second protrusion 4225, the third protrusion 4226, and the fourth protrusion 4232 may be provided in the form of bosses or support columns. For example, each supporting surface may be provided as a ring, a circle, an ellipse, a rectangle, a rounded rectangle, another polygon, or an irregular shape comprising a combination of straight edges and curved edges.

The positions of the above-mentioned protrusions may also be provided according to the requirements of the actual support stiffness and frequency, which is not limited in the present disclosure. For example, the circumferential spacing distances between the plurality of first protrusions 4224 may be provided to be the same or different, and the radial distances between the plurality of first protrusions 4224 and the central axis C of the damping bushing 421 may be provided to be the same or different. According to an implementation variation, the plurality of fourth protrusions 4232 may also be provided at a position having a certain distance from the outer edge of the second body 4231.

In addition, the damping module 40 further comprises a spring 5 to provide elastic support to the damping unit 42. A protrusion 4215 (as shown in FIG. 6) is provided below the first abutting flange 4212 of the damping bushing 421, an upper end of the spring 5 is snap-fitted to the protrusion 4215, and a lower end of the spring 5 abuts against the steering wheel armature 20.

In the first embodiment, the damping mass 41(i.e., the airbag 411 and the horn pad 30) is isolated connected to other steering wheel elements through the first damping element 422, the second damping element 423 and the damping bushing 421, thereby forming a fixing unit and a motion unit (the portion within the dashed-line box in Fig. 7). That is, in the first embodiment, the motion unit comprises the airbag 411 and the horn pad 30, and the fixing unit comprises the fastener 43 and the steering wheel armature 20.

During the driving process of the vehicle, due to the mode of the vehicle body, the steering system may resonate at a specific frequency, the vibration is transmitted to the steering wheel armature 20 through the steering column interface, and is further transmitted to the airbag 411, and the airbag 411 moves under resonance. Since the damping unit 42 for isolating the fixing unit from the motion unit is made of elastic material, the kinetic energy generated by the motion unit in the moving direction is converted into heat energy by compressing the damping unit 42, thereby achieving the effects of energy absorption and vibration damping.

### Second Embodiment

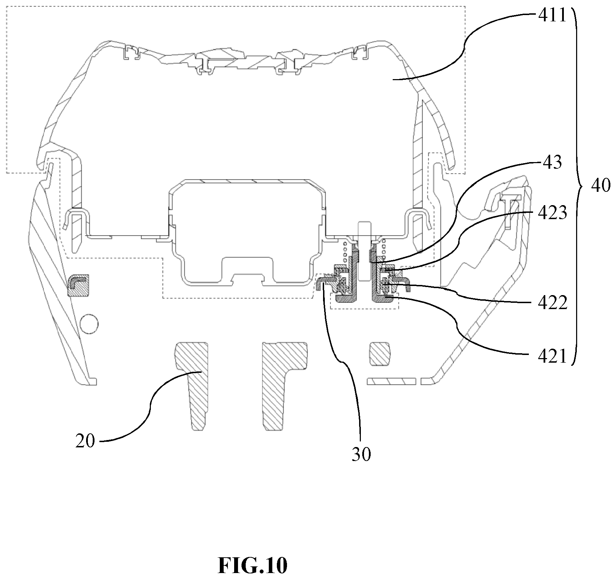

Structures in the second embodiment that are identical to those in the first embodiment will not be described again, and the difference from the first embodiment lies in that, as shown in FIG. 10, the fastener 43 fixes the damping unit 42 to the damping mass 41, and at least one supporting surface of the first damping element 422 and/or the second damping element 423 abuts against the steering wheel element 101.

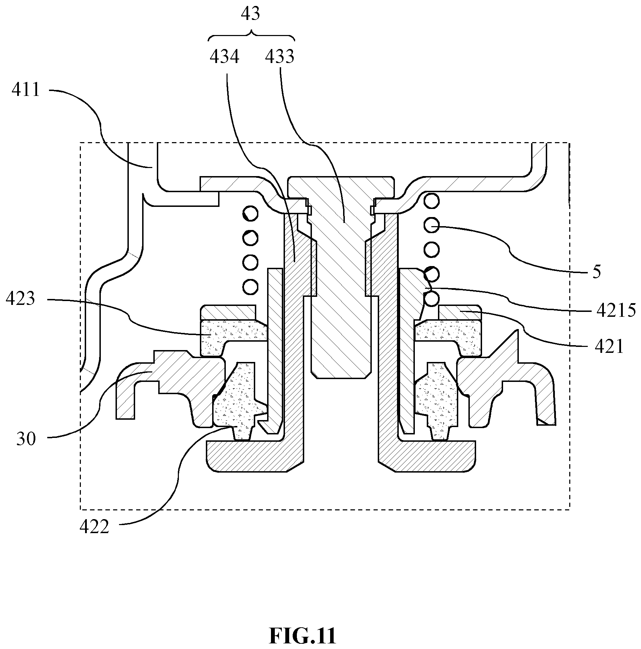

More specifically, in the second embodiment, the damping mass 41 comprises a driver-side airbag 411 mounted to the horn pad 30, and the fastener 43 fixes the damping unit 42 to the airbag 411 and enables at least one supporting surface of the first damping element 422 and/or the second damping element 423 to abut against the horn pad 30. More specifically, the fastener 43 comprises an internally threaded nut 434, which passes through the damping bushing 421, and the damping unit 42 is fixed to the airbag 411 by a rivet bolt 433 screwed into the nut 434. As shown particularly in FIG. 11, the first damping element 422, the second damping element 423, the damping bushing 421, the fastener 43, and the horn pad 30 are all arranged inverted 180° relative to the first embodiment. A lower edge of the nut 434 protrudes radially and outward to form a second abutting flange 432 axially abutting against the fourth supporting surface 4226a. An upper end of the spring 5 abuts against the airbag 411, and a lower end of the spring 5 is snap-fitted into the protrusion 4215 of the damping bushing 421, with the horn pad 30 serving a fastening function in this configuration.

In the second embodiment, the damping mass 41(that is, the airbag 411) is isolated connected to another steering wheel element by using the first damping element 422, the second damping element 423, and the damping bushing 421, to form a fixing unit and a motion unit (a portion within the dashed-line box in FIG. 10). That is, in this second embodiment, the motion unit comprises the airbag 411 and the fastener 43, and the fixing unit comprises the steering wheel armature 20 and the horn pad 30.

### Third Embodiment

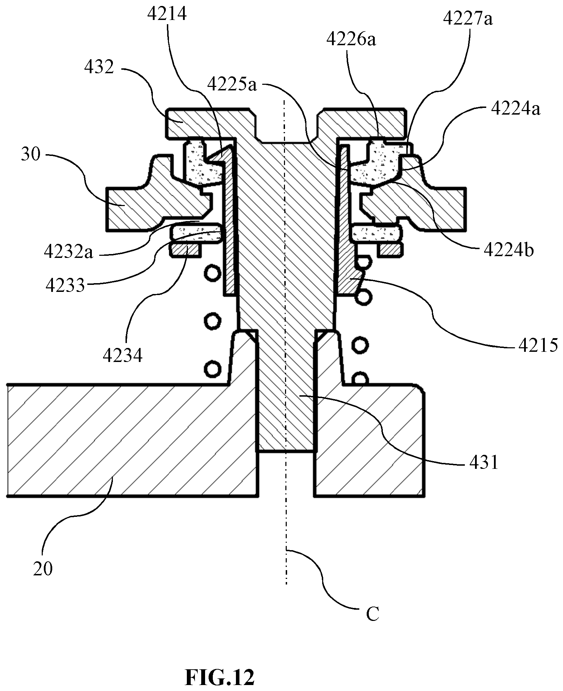

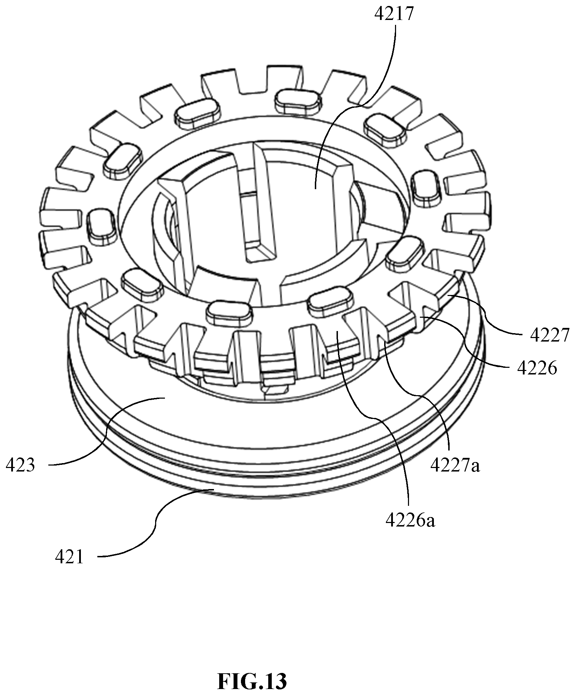

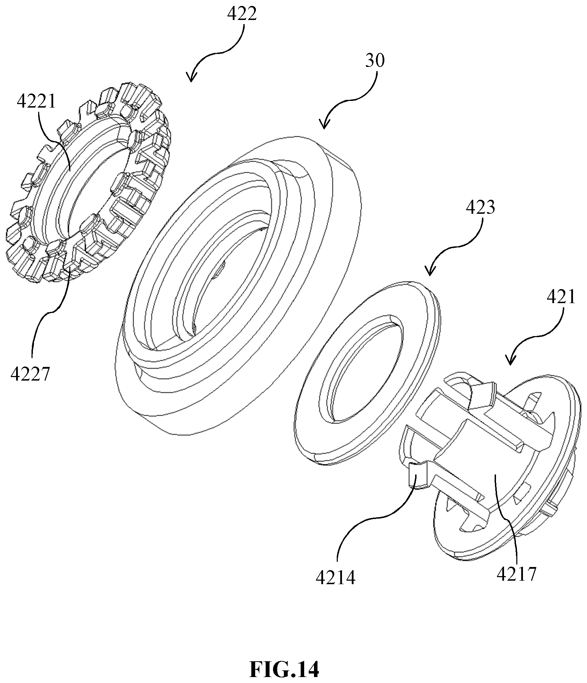

Structures in the third embodiment that are identical to those in the first embodiment will not be described again, and the difference from the first embodiment lies in that, as shown in FIGS. 12 to 14, the first damping element 422 further comprises a fifth protrusion 4227 protruding radially and outward from the upper portion of each third protrusion 4226, and a lower surface of each fifth protrusion 4227 forms an eighth supporting surface 4227a oriented opposite to the fourth supporting surface 4226a and axially abutting against the horn pad 30. This arrangement can prevent the motion unit from directly contacting the fixing unit, and play a role of isolation and noise reduction.

In addition, both the upper surface and the lower surface of the second damping element 423 are provided as planes, that is, the entire flat upper surface of the second damping element 423 forms the fifth supporting surface 4232a. The guiding shaft 4211 of the damping bushing 421 is evenly divided into a plurality of circumferential sections 4217 along the circumferential direction, an interval is provided between two adjacent circumferential sections 4217, and a top end of at least one circumferential section 4217 is provided with a clip 4214 to be snap-fitted to the step surface 4221 of the first damping element 422.

Similarly, in the third embodiment, the damping mass 41(i.e., the airbag 411 and the horn pad 30) is isolated connected to other steering wheel elements through the first damping element 422, the second damping element 423 and the damping bushing 421 to form a fixing unit and a motion unit. That is, in the third embodiment, the motion unit comprises the airbag 411 and the horn pad 30, and the fixing unit comprises the fastener 43 and the steering wheel armature 20.

### Fourth Embodiment

Structures in the fourth embodiment that are identical to those in the first embodiment will not be described again, and the difference from the first embodiment lies in that, as shown in FIG. 10, the first damping element 422 and the second damping element 423 are sleeved on the damping bushing 421 without a spacing, or the first damping element 422 and the second damping element 423 are formed as one piece. For example, the first damping element 422 and the second damping element 423 are fixedly connected through the wall 424, and the three together delimit an accommodating cavity 425 into which the guiding shaft 4211 of the damping bushing 421 extends.

It can be conceivable that the first damping element 422 and the second damping element 423 in the second and third embodiments can also be provided without a spacing, or the first damping element 422 and the second damping element 423 can be formed as an integral part.

The technical contents and features of the present disclosure have been disclosed above. However, it is conceivable that, those skilled in the art can make various changes and improvements to the above concept under the creative idea of the present disclosure, all of which fall within the protection scope of the present disclosure.

For example, according to an implementation variation not shown, the first damping element 422, the second damping element 423, the damping bushing 421, the fastener 43 and the horn pad 30 in the third embodiment may all be arranged inverted 180° relative to the third embodiment. Fastener 43 fixes the damping unit 42 to the damping mass 41 and enables at least one of the first damping element 422 and/or the second damping element 423 to abut against the steering wheel element 101. The upper end of the spring 5 abuts against the airbag 411, and the lower end of the spring 5 is snap-fitted to the protrusion 4215 of the damping bushing 421, with the horn pad 30 providing a fastening function.

In this implementation variation, the damping mass 41(i.e., the airbag 411) is isolated connected to other steering wheel elements by the first damping element 422, the second damping element 423 and the damping bushing 421, forming a fixing unit and a motion unit, and in this implementation variation, the motion unit comprises the airbag 411 and the fastener 43, and the fixing unit comprises the steering wheel armature 20 and the horn pad 30.

The description of the foregoing embodiments is illustrative rather than limitative, and the scope of protection of the present disclosure is determined by the appended claims.

## Claims

1. A damping module for a steering wheel device of a vehicle, the steering wheel device comprising a steering wheel element, the damping module and a fastener, wherein the damping module comprises:
a damping mass; and
a damping unit comprising a damping bushing, a first damping element and a second damping element, wherein the first damping element and the second damping element are sleeved on the damping bushing and each has at least one supporting surface;
wherein the fastener fixes the damping unit to the steering wheel element and enables at least one supporting surface of the first damping element and/or the second damping element to abut against the damping mass, or, the fastener fixes the damping unit to the damping mass, and enables at least one supporting surface of the first damping element and/or the second damping element to abut against the steering wheel element.

2. The damping module according to claim 1, wherein
the steering wheel element comprises a steering wheel armature and a horn pad mounted to the steering wheel armature;
the damping mass comprises the horn pad and an airbag mounted to the horn pad; and
the fastener fixes the damping unit to the steering wheel armature and enables at least one supporting surface of the first damping element and/or the second damping element to abut against the horn pad.

3. The damping module according to claim 1, wherein
the steering wheel element comprises a steering wheel armature and a horn pad mounted to the steering wheel armature;
the damping mass comprises an airbag mounted to the horn pad; and
the fastener fixes the damping unit to the airbag and enables at least one supporting surface of the first damping element and/or the second damping element to abut against the horn pad.

4. The damping module according to any one of claims 1 to 3, wherein
the first damping element and the second damping element are sleeved on the damping bushing without a spacing, or the first damping element and the second damping element are formed as one piece.

5. The damping module according to any one of claims 1 to 3, wherein
the damping bushing comprises a guiding shaft having a central through hole and a first abutting flange protruding radially and outward from the guiding shaft, the first damping element and the second damping element are sleeved on the guiding shaft, and the fastener comprises a fastening shaft extending into the central through hole and a second abutting flange protruding radially and outward from the fastening shaft outside the central through hole.

6. The damping module according to any one of claims 1 to 3, wherein
the first damping element has a first supporting surface and a second supporting surface arranged at an angle to each other and abutting radially and outward against the steering wheel element.

7. The damping module according to claim 6, wherein
the first supporting surface extends parallel to an axial direction of the damping bushing, and the second supporting surface extends obliquely relative to the axial direction of the damping bushing.

8. The damping module according to claim 6, wherein
the first damping element further has a third supporting surface abutting radially and inward against the damping bushing.

9. The damping module according to claim 8, wherein
at least one of the first supporting surface and the second supporting surface at least partially overlaps with a projection of the third supporting surface along an axial direction of the damping bushing.

10. The damping module according to claim 5, wherein
the first damping element further has a fourth supporting surface axially abutting against the second abutting flange.

11. The damping module according to any one of claims 1 to 3, wherein
the second damping element has a fifth supporting surface axially abutting against the steering wheel element.

12. The damping module according to claim 11, wherein
the second damping element further has a sixth supporting surface abutting radially and inward against the damping bushing.

13. The damping module according to claim 5, wherein
the second damping element further has a seventh supporting surface axially abutting against the first abutting flange.

14. The damping module of claim 10, wherein
the first damping element further has an eighth supporting surface oriented opposite to the fourth supporting surface and axially abutting against the steering wheel element.

15. A steering wheel device, comprising the damping module according to any one of claims 1 to 14.

16. A vehicle, comprising the steering wheel device according to claim 15.
